# FASCICULE DE BREVET EUROPEEN

(11) **EP 0 708 161 B1**
(45) Date de publication et mention de la délivrance du brevet: **06.05.1998**
(21) Numéro de dépôt: 95402172.1
(22) Date de dépôt: 27.09.1995
(51) Int. Cl.: C09J 5/06, C09J 189/06

(54) **Procédé d'assemblage à chaud et collage de substrats dont au moins un est poreux**
Verfahren zum Heissverbinden und Verkleben von Substraten, wovon mindestens eines porös ist
Process for the hot assembly and bonding of substrates, at least one of them being porous

(30) Priorité: 29.09.1994 FR 9411813
(43) Date de publication de la demande: 24.04.1996
(73) Titulaire: ALQUIER Colles et Gélatines SA, 81660 Bout du Pont de l'Arn (FR)
(72) Inventeur: Alquier, Bernard, F-81660 Bout du Pont de l'Arn (FR); Alquier, Michel, F-81200 Mazamet (FR)
(74) Mandataire: Ravina, Bernard

(56) Documents cités:
- WO-A-93/04711
- US-A- 3 438 374

## Description

La présente invention a pour objet un procédé d'assemblage à chaud et collage de substrats dont au moins un présente une porosité à l'eau et une colle thermofusible en milieu aqueux à base de gélatine mise en oeuvre dans le procédé selon l'invention.

Il est connu dans l'industrie telle que celle de l'emballage, du cartonnage, de la transformation du papier ou du textile, des procédés dits de thermocollage.
Cette définition est très large ; l'invention se rapporte plus précisément à un procédé d'assemblage et collage de deux substrats dont au moins un présente une porosité.

L'assemblage et collage nécessitent l'utilisation d'adhésifs présentant un "tack" important ; le "tack se définissant comme l'aptitude de l'adhésif à former immédiatement après assemblage une liaison d'intensité mesurable et ce, quel que soit le temps de collage définitif.
Il est fait appel à des colles thermofusibles connues sous le nom de "hot melt" qui sont des colles synthétiques à température de fusion et d'application élevée (150-200°c) et qui ont naturellement un tack élevé.

Il en résulte des contraintes spécifiques au niveau des installations de collage, de leur nettoyage qui doit se faire avec des solvants synthétiques, et de la sécurité pendant les manipulations.
Le joint de colle "Hot melts" reste à l'interface des substrats et ne crée pas une réelle liaison entre eux. D'autre part, l'assemblage par "Hot melt" est thermoréversible ; à température élevée, le joint collé se ramollit.

Les colles animales à base de gélatine présentent l'avantage d'être solubles à l'eau, ce qui permet une pénétration des agents collants dans un substrat poreux tel que papier, bois, carton, tissus, etc...
Cela facilite le nettoyage des installations d'application. Le collage par des colles animales n'est plus thermoréversible quand la Sicité du joint collé est supérieure à 80%.

Enfin, les colles animales du type gélatines solubles à l'eau facilitent le recyclage des substrats. Un inconvénient des colles animales connues par comparaison aux "Hot melts" est un tack de moindre force, ce qui les a fait écarter jusqu'à ce jour de l'industrie de l'emballage en particulier dans laquelle la mécanisation des process nécessite un assemblage dans un temps de quelques secondes ; de plus, les colles animales du type gélatine connues (cf. US-A-3 438 374) deviennent cassantes au séchage et au vieillissement.

La présente invention vise à obvier à ces inconvénients en mettant en oeuvre un procédé d'assemblage à chaud et de collage à partir de colles animales qui apporte les avantages des "Hot melts" au niveau du temps d'assemblage (tack) sans en présenter les inconvénients mentionnés plus haut et qui réalise un véritable collage par pénétration des agents collants dans la structure du ou des substrats à assembler et coller.

A cet effet, le procédé d'assemblage à chaud et collage de substrats dont au moins un est poreux, se caractérise essentiellement par l'application à chaud (50° à 80°C) d'un mélange collant dans lequel :
1) la proportion de gélatine dans la formule doit être égale ou supérieure à 30% et égale ou inférieure à 55% ;
2) la proportion d'eau comprise entre 35 et 70% du mélange collante ;
3) la colle comprend un mélange de gélatines dont au moins une (à concentration de 6,67%) présente une force en gelée (Bloom) égale ou supérieure à 150 (Bloom) ;
4) la colle comprend un mélange de gélatines dont au moins une (à concentration de 6,67%) présente un rapport Bloom/viscosité élevé égale ou supérieure à 4 ;
5) la colle contient un agent accélérateur constitué de sels minéraux et ;
6) la viscosité de la colle doit être supérieure ou égale à 16 MPS et inférieure ou égale à 50 MPS.

Suivant une autre caractéristique de l'invention, la Colle thermofusible à base de gélatine mise en oeuvre dans le procédé comprend :
1) la proportion de gélatine dans la formule doit être égale ou supérieure à 30% et égale ou inférieure à 55% ;
2) la proportion d'eau comprise entre 35 et 70% du mélange collante ;
3) la colle comprend un mélange de gélatines dont au moins une (à concentration de 6,67%) présente une force en gelée (Bloom) égale ou supérieure à 150 (Bloom) ;
4) la colle comprend un mélange de gélatines dont au moins une (à concentration de 6,67%) présente un rapport Bloom/viscosité élevé égale ou supérieure à 4 ;
5) la colle contient un agent accélérateur constitué de sels minéraux et ;
6) la viscosité de la colle doit être supérieure ou égale à 16 MPS et inférieure ou égale à 50 MPS.

D'autres avantages et caractéristiques de l'invention apparaîtront à la lecture de la description ci-après de formes de réalisation de l'invention données à titre d'exemple non limitatif.

Le procédé selon l'invention d'assemblage à chaud et de collage de substrats dont au moins un est poreux a l'eau, consiste en l'application à chaud, entre 50°C et 80°C d'une colle à base d'un mélange comportant une ou plusieurs gélatines dont au moins une présente une force en gelée (indice Bloom) élevée et un rapport Bloom/viscosité élevé (décalé par comparaison avec le rapport normal qui est de 3).

Cette colle peut se présenter sèche ou prête à l'emploi sous forme de gel.
Si elle est sèche, elle doit être mélangée à de l'eau dans une proportion de 35% à 70%.
Le chauffage entre 50° et 80° centigrade va avoir pour effet dans le cas d'un gel, de le fondre et dans le cas de colle sèche, de la solubiliser. L'eau utilisant la porosité du ou des substrats va véhiculer l'agent collant dans le ou les substrats en réalisant une liaison de l'agent collant et du ou des substrats.

Selon le procédé objet de l'invention, la gélatine décalée mise en oeuvre, reçoit un adjuvant constitué de sels minéraux agissant comme accélérateur de tack et de prise qui ont pour effet de bloquer partiellement les chaînes moléculaires de la gélatine, de diminuer le temps ouvert et d'accélérer la prise.

Selon l'invention, au moins une gélatine décalée peut être associée à une ou des gélatines non décalées (dont le rapport Bloom/viscosité est de l'ordre de 3).

Le procédé selon l'invention permet d'obtenir un assemblage dans un temps dit ouvert de 2 secondes, le temps ouvert et le tack au minimum équivalent pouvant être réglé par le fabricant en fonction des souhaits de l'utilisateur.

La colle utilisée selon l'invention comprend un mélange de gélatines dont au moins une (à concentration de 6,67%) doit avoir une force en gelée (indice Bloom) élevée, c'est à dire égal ou supérieur à 150 Bloom et un rapport Bloom sur viscosité égal ou supérieur à 4, c'est à dire décalé par comparaison avec le rapport Bloom/viscosité normal qui est de 3.
Le mélange de gélatines reçoit une adjonction de sels minéraux pour accélérer sa prise et différents adjuvants.

Il est apparu à l'expérience que la gélatine décalée du mélange devait présenter une force en gelée (indice Bloom) supérieure ou égale à 150 et inférieure ou égale à 280.
Sa viscosité doit être supérieure ou égale à 16 MPS et inférieure ou égale à 50 MPS.
Le rapport Bloom/viscosité de cette gélatine doit être supérieur ou égal à 4 et inférieur ou égal à 7.

A titre d'exemple, si la viscosité est de 40 MPS, l'indice Bloom peut varier de 160 à 280 Bloom.
La proportion de gélatine dans la formule doit être égale ou supérieure à 30% et égale ou inférieure à 55% complétée avec de l'eau et des adjuvants.

Le mélange de gélatines (décalée et non décalée) doit présenter une force en gelée (indice Bloom) supérieure ou égale à 150 et inférieure ou égale à 280.
Sa viscosité doit être supérieure ou égale à 16MPS et inférieure ou égale à 50MPS.

Selon l'invention, le mélange de gélatine contient un agent accélérateur de prise constitué de sels minéraux tels que des sels de magnésium et/ou d'ammonium qui vont augmenter son tack en bloquant partiellement les chaînes de sa molécule, en diminuant le temps ouvert et augmentant la rapidité de tack et de prise.

La colle selon l'invention peut également contenir un ou plusieurs polyalcools et/ou polysaccharides du type glucose, saccharose, glycérine, sorbitol, etc... qui vont augmenter la souplesse du joint de colle en évitant l'effet cassant dû au séchage et au vieillissement, et le temps ouvert et qui dans certaines formules vont "tamponner" l'effet accélérateur des sels minéraux lors de leur introduction dans les gélatines en solution.

La colle selon l'invention peut également contenir un ou plusieurs adjuvants du type antimousse ou démoussant connus.

La formule de la colle selon l'invention contient au moins un conservateur ayant un rôle fongicide et/ou fongi-statique.
Elle peut dans le cas d'utilisation particulière, telle qu'adhésion sur des substrats à faible mouillabilité contenir des polymères adhésifs tels que des acétates de polyvinyle/éthylène, des acryliques, etc...

La colle selon l'invention peut être préparée à partir d'un mélange à sec à 10-15% d'humidité qui sera mélangé à l'eau et chauffé avant utilisation.

Elle peut être préparée en gel aqueux qui sera fondu avant usage.

La présente invention concerne tout assemblage à chaud et collage de supports dont au moins un est poreux.

## Revendications

1. Procédé d'assemblage à chaud et collage de substrats dont au moins un est poreux, caractérisé par l'application à chaud (50° à 80°C) d'un mélange collant dans lequel :
1) la proportion de gélatine dans la formule doit être égale ou supérieure à 30% et égale ou inférieure à 55% ;
2) la proportion d'eau comprise entre 35 et 70% du mélange collante ;
3) la colle comprend un mélange de gélatines dont au moins une (à concentration de 6,67%) présente une force en gelée (Bloom) égale ou supérieure à 150 (Bloom) ;
4) la colle comprend un mélange de gélatines dont au moins une (à concentration de 6,67%) présente un rapport Bloom/viscosité élevé égale ou supérieure à 4 ;
5) la colle contient un agent accélérateur constitué de sels minéraux et ;
6) la viscosité de la colle doit être supérieure ou égale à 16 MPS et inférieure ou égale à 50 MPS.

2. Colle thermofusible à base de gélatine mise en oeuvre dans le procédé selon la revendication 1 caractérisé en ce que :
1) la proportion de gélatine dans la formule doit être égale ou supérieure à 30% et égale ou inférieure à 55% ;
2) la proportion d'eau comprise entre 35 et 70% du mélange collante ;
3) la colle comprend un mélange de gélatines dont au moins une (à concentration de 6,67%) présente une force en gelée (Bloom) égale ou supérieure à 150 (Bloom) ;
4) la colle comprend un mélange de gélatines dont au moins une (à concentration de 6,67%) présente un rapport Bloom/viscosité élevé égale ou supérieure à 4 ;
5) la colle contient un agent accélérateur constitué de sels minéraux et ;
6) la viscosité de la colle doit être supérieure ou égale à 16 MPS et inférieure ou égale à 50 MPS.

3. Colle thermofusible à base de gélatine selon la revendication 2 caractérisée en ce que la ou les gélatines décalées présentent (à concentration de 6,67%) :
- une force en gelée (Bloom) supérieure ou égale à 150 et inférieure ou égale à 280,
- une viscosité supérieure ou égale à 16MPS et inférieure ou égale à 50MPS,
- un décalage (rapport Bloom/viscosité) supérieur ou égal à 4 et inférieur ou égal à 7.

4. Colle thermofusible selon la revendication 2 caractérisée en ce que la ou les gélatines prises ensemble présentent (à concentration de 6,67%) :
- une force en gelée (Bloom) supérieure ou égale à 150 et inférieure ou égale à 280,
- une viscosité supérieure ou égale à 16 MPS et inférieure ou égale à 50 MPS,

5. Colle thermofusible selon la revendication 2 caractérisée en ce que les sels minéraux sont des sels d'amonium et/ou de magnésium.

6. Colle thermofusible selon la revendication 3 caractérisée en ce que le mélange contient un ou plusieurs polyalcools et/ou polysaccharides.

7. Colle thermofusible selon la revendication 3 caractérisée en ce qu'elle comprend un ou plusieurs conservateurs à action fongicide et/ou fongistatique.

8. Colle thermofusible selon la revendication 3 caractérisée en ce qu'elle contient des polymères adhésifs.

## Claims

1. Method for assembling, while hot, and bonding substrates, at least one of which is porous, characterised by the application while hot (50° to 80°C) of a bonding mixture in which:
1) the proportion of gelatin in the formula must be equal to or greater than 30% and equal to or less than 55%;
2) the proportion of water comprised between 35 and 70% of the bonding mixture;
3) the adhesive comprises a mixture of gelatins, at least one of which (at a concentration of 6.67%) has a gelling force (Bloom) equal to or greater than 150 (Bloom);
4) the adhesive comprises a mixture of gelatins, at least one of which (at a concentration of 6.67%) has a high Bloom/viscosity ratio equal to or greater than 4;
5) the adhesive contains an accelerating agent constituted by mineral salts; and
6) the viscosity of the adhesive must be greater than or equal to 16 MPS and less than or equal to 50 MPS.

2. Hot-melt adhesive based on gelatin used in the method according to Claim 1, characterised in that:
1) the proportion of gelatin in the formula must be equal to or greater than 30% and equal to or less than 55%;
2) the proportion of water comprised between 35 and 70% of the bonding mixture;
3) the adhesive comprises a mixture of gelatins, at least one of which (at a concentration of 6.67%) has a gelling force (Bloom) equal to or greater than 150 (Bloom);
4) the adhesive comprises a mixture of gelatins, at least one of which (at a concentration of 6.67%) has a high Bloom/viscosity ratio equal to or greater than 4;
5) the adhesive contains an accelerating agent constituted by mineral salts; and
6) the viscosity of the adhesive must be greater than or equal to 16 MPS and less than or equal to 50 MPS.

3. Hot-melt adhesive based on gelatin according to Claim 2, characterised in that the offset gelatin(s) have (at a concentration of 6.67%):
- a gelling force (Bloom) greater than or equal to 150 and less than or equal to 280,
- a viscosity greater than or equal to 16 MPS and less than or equal to 50 MPS,
- an offset (Bloom/viscosity ratio) greater than or equal to 4 and less than or equal to 7.

4. Hot-melt adhesive according to Claim 2, characterised in that the gelatin(s) taken together have (at a concentration of 6.67%):
- a gelling force (Bloom) greater than or equal to 150 and less than or equal to 280,
- a viscosity greater than or equal to 16 MPS and less than or equal to 50 MPS.

5. Hot-melt adhesive according to Claim 2, characterised in that the mineral salts are ammonium and/or magnesium salts.

6. Hot-melt adhesive according to Claim 3, characterised in that the mixture contains one or more polyalcohols and/or polysaccharides.

7. Hot-melt adhesive according to Claim 3, characterised in that it comprises one or more preservatives with fungicidal and/or fungistatic action.

8. Hot-melt adhesive according to Claim 3, characterised in that it contains adhesive polymers.

## Patentansprüche

1. Verfahren zum Heißverbinden und Kleben von Substraten, von denen wenigstens eines porös ist, **dadurch gekennzeichnet,** daß heiß (50 bis 80°C) eine Klebmittelmischung aufgebracht wird, in der
1) der Anteil Gelatine in der Rezeptur obligatorisch gleich oder höher als 30% und gleich oder niedriger als 55% ist;
2) der Anteil Wasser zwischen 35 und 70% der Klebmittelmischung liegt;
3) der Klebstoff eine Mischung von Gelatinen umfaßt, von denen mindestens eine (Bei einer Konzentration von 6,67%) eine Geleekraft (Bloom) gleich oder höher als 150 (Bloom) aufweist;
4) der Klebstoff eine Mischung von Gelatinen umfaßt, von denen mindestens eine (bei einer Konzentration von 6,67%) ein hohes Verhältnis Bloom/Viskosität gleich oder höher als 4 aufweist;
5) der Klebstoff ein Beschleunigungsmittel enthält, das aus Mineralsalzen besteht; und
6) die Viskosität des Klebstoffs obligatorisch höher als oder gleich 16 MPS und kleiner als oder gleich 50 MPS ist.

2. Heißschmelzbarer Klebstoff auf Gelatinebasis, der im Verfahren nach Anspruch 1 verwendet wird, **dadurch gekennzeichnet,** daß
1) der Anteil Gelatine in der Rezeptur obligatorisch gleich oder höher als 30% und gleich oder niedriger als 55% ist;
2) der Anteil Wasser zwischen 35 und 70% der Klebmittelmischung liegt;
3) der Klebstoff eine Mischung von Gelatinen umfaßt, von denen mindestens eine(bei einer Konzentration von 6,67%) eine Geleekraft (Bloom) gleich oder höher als 150 (Bloom) aufweist;
4) der Klebstoff eine Mischung von Gelatinen umfaßt, von denen mindestens eine (bei einer Konzentration von 6,67%) ein hohes Verhältnis Bloom/Viskosität gleich oder höher als 4 aufweist;
5) der Klebstoff ein Beschleunigungsmittel enthält, das aus Mineralsalzen besteht; und
6) die Viskosität des Klebstoffs obligatorisch höher als oder gleich 16 MPS und kleiner als oder gleich 50 MPS ist.

3. Heißschmelzbarer Klebstoff auf Gelatinebasis nach Anspruch 2, **dadurch gekennzeichnet,** daß die verschobene Gelatine oder die verschobenen Gelatinen (bei einer Konzentration von 6,67%) aufweisen:
- eine Geleekraft (Bloom) höher als oder gleich 150 und kleiner als oder gleich 280;
- eine Viskosität höher als oder gleich 16 MPS und kleiner als oder gleich 50 MPS,
- eine Verschiebung (Verhältnis Bloom/Viskosität) höher als oder gleich 4 und niedriger als oder gleich 7.

4. Heißschmelzbarer Klebstoff nach Anspruch 2, **dadurch gekennzeichnet,** daß die Gelatine oder Gelatinen zusammengenommen (bei einer Konzentration von 6,67%) aufweisen:
- eine Geleekraft (Bloom) höher als oder gleich 150 und kleiner als oder gleich 280;
- eine Viskosität höher als oder gleich 16 MPS und kleiner als oder gleich 50 MPS.

5. Heißschmelzbarer Klebstoff nach Anspruch 2, **dadurch gekennzeichnet,** daß die Mineralsalze Ammonium- und/oder Magnesiumsalze sind.

6. Heißschmelzbarer Klebstoff nach Anspruch 3, **dadurch gekennzeichnet,** daß die Mischung einen oder mehrere Polyalkohole und/oder ein oder mehrere Polysaccharide enthält.

7. Heißschmelzbarer Klebstoff nach Anspruch 3, **dadurch gekennzeichnet,** daß er einen oder mehrere Konservierungsstoffe mit fungizider und/oder fungistatischer Wirkung enthält.

8. Heißschmelzbarer Klebstoff nach Anspruch 3, **dadurch gekennzeichnet,** daß er klebende Polymere enthält.
